# EUROPÄISCHE PATENTANMELDUNG

(11) **EP 3 241 872 A1**
(43) Veröffentlichungstag der Anmeldung: **08.11.2017**
(21) Anmeldenummer: 16168011.1
(22) Anmeldetag: 03.05.2016
(51) Int. Cl.: C09D 7/00

(54) **SYSTEM ZUM AUFTRAGEN EINER FARBSCHICHT AUF EIN SUBSTRAT**

(71) Anmelder: Lehmann, Robyn, 9245 Oberbüren (CH)
(72) Erfinder: Lehmann, Robyn, 9245 Oberbüren (CH)
(74) Vertreter: Hepp Wenger Ryffel AG

(57) **Zusammenfassung**

System zum Auftragen einer Farbschicht auf ein Substrat umfassend natürlichen Kautschuk und/oder synthetischen Kautschuk, wobei das System mindestens einen Aktivator zum Aktivieren des Substrats, mindestens eine Farbzusammensetzung und Gebrauchsinformationen für die Aufbringung der Farbzusammensetzung auf das Substrat, insbesondere auf Fahrzeugreifen. Der Aktivator weist Diethylenglykolmonoalkylether oder Polyethylenglykolmonoalkylether, wobei die Alkylgruppe 3 bis 8 Kohlenstoffatomen aufweist, ethoxilierten Fettalkohol mit 8 bis 24 Kohlenstoffatomen und Diphosphat auf.

## Beschreibung

Die Erfindung betrifft ein System zum Auftragen einer Farbschicht auf ein Substrat umfassend natürlichen Kautschuk und/oder synthetischen Kautschuk, insbesondere auf Fahrzeugreifen, gemäss Anspruch 1.

Reifen von Kraftfahrzeugen können zu unterschiedlichen Zwecken gekennzeichnet werden. Hierzu werden Muster, Bilder oder Grafiken auf den Reifen aufgebracht. Insbesondere werden Autoreifen zu ästhetischen Zwecken insbesondere im Autotuning und Werbezwecken verziert bzw. partiell oder vollständig mit Farbe beschichtet. Farbliche Beschichtungen der Felgen sind dabei verbreitet. Weniger verbreitet sind farbliche Beschichtungen auf Reifen.

DE 10 2013 017 433 A1 beschreibt ein Verfahren zum Gestalten eines Reifens, wobei ein Deckmaterial auf eine Oberfläche des Reifens aufgebracht wird und das Deckmaterial dauerhaft an der Oberfläche des Reifens anhaftet. Mittels einer Schablone werden Bereiche definiert, welche bedeckt werden sollen. Deckmaterial, insbesondere Kreide, wird auf die definierten Bereiche zum Gestalten des Reifens aufgetragen. Nachteilig ist daran, dass das Deckmaterial keine homogene Oberfläche erzeugt und damit ein schlechtes ästhetisches Erscheinungsbild erzielt wird. Des Weiteren ist das Deckmaterial nicht dauerhaft und nicht witterungsbeständig.

DE 10 2011 050 886 A1 offenbart das Kennzeichnen eines Reifens, wobei eine flächige Form an der Seitenwand des Reifens befestigt wird. Die Form wird mit einem Klebstoff am Reifen befestigt. Nachteilig an diesem Verfahren ist, dass die flächigen Formen separat bereitgestellt werden müssen und sich nicht auf einfache Art und Weise von der Seitenwand des Reifens ablösen lassen.

Weitere Nachteile des Stands der Technik sind eine mangelnde Haftung der Farbbeschichtung auf dem Reifen sowie der Abrieb der Farbbeschichtung unter mechanischen Einwirkungen bei normalen Betriebsbedingungen.

Es ist daher eine Aufgabe der Erfindung, die Nachteile des Stands der Technik zu überwinden. Insbesondere ist es eine Aufgabe der Erfindung ein System für Reifen bereitzustellen, wobei eine Farbe in einfacher Art und Weise homogen auf den Reifen aufbringbar ist und entfernbar ist. Des Weiteren ist es eine Aufgabe der Erfindung ein System für Reifen bereitzustellen, wobei die Farbbeschichtung unter normalen Betriebsbedingungen, beispielsweise Fahrbetrieb des Fahrzeugs, in Waschstrassen/- anlagen, bei jeglicher Witterung, Verschmutzung und Steinschlag, auf dem Reifen haftet und abriebfest ist.

Diese Aufgaben werden mit den Merkmalen der unabhängigen Ansprüche gelöst.

Die Erfindung betrifft ein System zum Auftragen einer Farbschicht auf ein Substrat, insbesondere auf Fahrzeugreifen. Das Substrat umfasst natürlichen Kautschuk und/oder synthetischen Kautschuk. Das System umfasst mindestens einen Aktivator zum Aktivieren des Substrats, mindestens eine Farbzusammensetzung und Gebrauchsinformationen für die Aufbringung der Farbzusammensetzung auf das Substrat, insbesondere auf Fahrzeugreifen. Der Aktivator weist Diethylenglykolmonoalkylether oder Polyethylenglykolmonoalkylether, wobei die Alkylgruppe 3 bis 8 Kohlenstoffatomen aufweist, ethoxilierten Fettalkohol mit 8 bis 24 Kohlenstoffatomen und Diphosphat auf.
6 bis 22 Kohlenstoffatome des Fettalkohols werden von der Fettsäure bereitgestellt und die verbleibenden 2 Kohlenstoffe entsprechend von dem Ethylenoxid.

Der Aktivator kann 2-(2-Butoxyethoxy)ethanol, insbesondere im Bereich von 0,1-5 Vol.-%, bevorzugt 0,5 bis 4 Vol.-%, besonders bevorzugt 1 bis 3,0 Vol.-%, Isotridecanol ethoxyliert mit 5 bis 9 Mol Ethylenoxid, insbesondere im Bereich von 1 bis 20 Vol.-%, bevorzugt 2 bis 15 Vol.-%, besonders bevorzugt 2,5 bis 10 Vol.%, und Tetrakaliumdiphosphat im Bereich von 1 bis 15 Vol.-%, bevorzugt 1 bis 5 Vol.-%, besonders bevorzugt 1 bis 4 Vol.-% aufweisen.

Auf diese Weise wird ein System zur Verfügung gestellt, mit welchem eine Farbschicht in einfacher Art und Weise homogen auf das Substrat aufgebracht wird. Zudem ist die Farbschicht entfernbar, beispielweise unter Verwendung eines Silikonentferners, bspw. Antisilikon, und einem Hochdruckreiniger. Eine Farbschicht kann somit rückstandsfrei vom Substrat entfernt und falls gewünscht eine andere Farbschicht aufgetragen werden. Des Weiteren haftet die Farbschicht unter normalen Betriebsbedingungen bspw. eines Fahrzeugreifens besonders gut am Substrat und macht die mechanischen Bewegungen des Reifens mit, ohne sich dabei vom Reifen zu lösen.

Der Aktivator reinigt, insbesondere entfettet, die mit der Farbzusammensetzung zu beschichtende Oberfläche.

Isotridecanol ethoxyliert mit 5 bis 9 Mol Ethylenoxid entspricht der CAS-Nr. 69011-36-05.

Unter Farbzusammensetzungen werden hier und im Folgenden Zusammensetzungen verstanden, welche Farbzusätze, beispielweise Farbpigmente, enthalten. Diese Farbzusätze sind handelsübliche Farben und Farbtöne eingeschlossen schwarz und weiss.

Wird mit dem erfindungsgemässen System eine schwarze Farbzusammensetzung aufgetragen, so verbessert dies das Erscheinungsbild des schwarzen Reifens bzw. der Seitenwand des schwarzen Reifens im Sinne eines Reifenschwärzers. Ausgebleichte Reifen werden so dauerhaft geschwärzt.

Der Aktivator kann ein sprühbarer Aktivator sein. Der Aktivator wird dafür bevorzugt in einer handelsüblichen Sprühflasche bzw. Sprühdose bereitgestellt, welche anwendungsübliche Lösungsmittel und/oder Treibmittel/-gase aufweist. Derart wird der Aktivator besonders gleichmässig auf das Substrat aufgetragen und eine gleichmässige Aktivierung und Reinigung des Substrats gewährleistet.

Die Farbzusammensetzung kann eine sprühbare Farbzusammensetzung sein. Die Farbzusammensetzung wird dafür bevorzugt in einer handelsüblichen Sprühflasche bzw. Sprühdose bereitgestellt, welche anwendungsübliche Lösungsmittel und/oder Treibmittel/-gase aufweist. Derartige Farbzusammensetzungen sind auch als Sprühfolien bekannt. Derart wird die Farbzusammensetzung besonders gleichmässig auf das Substrat aufgetragen, so dass eine besonders gleichmässige Farbschicht entsteht, welche ästhetisch ansprechend ist.

Farbzusammensetzungen sind beispielsweise unter "Car-Dip Liquid Spray Wrap" von Car-Dip UK Limited erhältlich.

Das System kann ein Mittel zum mechanischen Aufrauen des Substrats umfassen. Derartige Mittel sind bspw. erhältlich unter dem Handelsnamen Scotch Brite oder können, insbesondere feines, Schmirgelpapier sein.

Der sprühbare Aktivator und die sprühbare Farbzusammensetzung haben den Vorteil, dass Auftragsgegenstände wie beispielsweise Pinsel nicht notwendig sind. Somit muss kein Auftragsgegenstand bereitgestellt und gereinigt werden.

Das System kann ein Klebeband als Schablone oder eine Schablone für das Aufbringen des Aktivators und/oder der Farbzusammensetzung und/oder als Schutz für Bereiche, welche nicht beschichtet werden wollen, umfassen. Auf diese Weise können der Aktivator und/oder die Farbzusammensetzung gezielt auf definierte Applikationsbereiche, beispielsweise auf der Seitenwand eines Reifens, aufgetragen werden. Eine Verunreinigung von Bereichen, welche nicht beschichtet werden sollen, durch den Aktivator und/oder die Farbzusammensetzung wird so vermieden.

Das Klebeband kann einen haftenden Bereich und einen nichthaftenden Bereich aufweisen, wobei der nichthaftende Bereich gefaltet ist. Mittels des haftenden Bereichs wird das Klebeband auf das Substrat angebracht. Durch die Faltung des nichthaftenden Bereichs kann dieser über benachbarte Bereiche, beispielsweise die Felge eines Rads, geklappt werden und diese vor dem Aktivator und/oder der Farbzusammensetzung schützen.

Das Substrat kann ein Reifen, insbesondere ein Autoreifen, ein Motorradreifen oder ein Fahrradreifen, sein. Des Weiteren kann das Substrat ein Reifen von Traktoren, Lastkraftwagen, Kleinmotorädern oder Kleinkrafträdern sein.

Ein weiterer Aspekt der Erfindung betrifft ein Verfahren zum Auftragen einer Farbschicht auf ein Substrat, insbesondere auf Fahrzeugreifen, mit einem System wie vorgängig erläutert. Das Substrat umfasst natürlichen Kautschuk und/oder synthetischen Kautschuk. Das erfindungsgemässe Verfahren umfasst die Schritte Aufbringen des Aktivators auf das Substrat, Reinigen des Substrats, insbesondere mit Wasser, und Aufbringen der Farbzusammensetzung auf das Substrat. Auf dieses Weise kann besonders einfach eine Farbschicht auf ein Substrat, insbesondere auf Fahrzeugreifen, aufgebracht werden, welche unter normalen Betriebsbedingungen, bspw. eines Fahrzeugreifens, abriebfest ist und besonders gut am Substrat haftet. Des Weiteren ist die Farbschicht wie vorgängig erläutert vom Substrat entfernbar.

Der Aktivator kann auf das Substrat aufgesprüht werden. Derart wird der Aktivator besonders gleichmässig aufgetragen und eine gleichmässige Aktivierung und Reinigung des Substrats gewährleistet.

Die Farbzusammensetzung kann auf das Substrat aufgesprüht werden. Derart wird die Farbzusammensetzung besonders gleichmässig auf das Substrat aufgetragen, so dass eine besonders gleichmässige Farbschicht entsteht, welche ästhetisch ansprechend ist.

Vor dem Aufbringen der Farbzusammensetzung kann das Substrat, insbesondere mit einem Mittel zum Aufrauen, aufgeraut werden. Dies ermöglicht ein verbessertes Eindringen des Aktivators in die Oberfläche des Substrats sowie eine verbesserte Haftung der Farbschicht an der Oberfläche des Substrats. Des Weiteren werden auf diese Weise Verunreinigungen, beispielsweise Fette, welche die Anhaftung der Farbschicht am Substrat stören, entfernt.

Ein Klebebands als Schablone oder eine Schablone kann für das Aufbringen des Aktivators und/oder der Farbezusammensetzung oder als Schutz für Bereiche, welche nicht beschichtet werden sollen, aufgebracht werden. Auf diese Weise können der Aktivator und/oder die Farbzusammensetzung gezielt auf definierte Applikationsbereiche, beispielsweise auf der Seitenwand eines Reifens, aufgetragen werden. Eine Verunreinigung von Bereichen, welche nicht beschichtet werden sollen, wird so vermieden.

Das Klebeband kann einen haftenden Bereich und einen nichthaftenden Bereich aufweisen, wobei der nichthaftende Bereich gefaltet ist. Mittels des haftenden Bereichs wird das Klebeband auf das Substrat angebracht. Durch die Faltung des nichthaftenden Bereichs kann der nicht haftende Bereich über benachbarte Bereiche, beispielsweise die Felge eines Rads, geklappt werden und die benachbarten Bereiche vor dem Aktivator und/oder der Farbzusammensetzung schützen.

Die aufgebrachte Farbzusammensetzung kann aktiv getrocknet werden. Dies kann insbesondere mittels einem Kaltgebläse oder Heissgebläse, beispielsweise einem Fön, erfolgen. Derart wird die aufgebrachte Farbzusammensetzung in kurzer Zeit getrocknet und fertig gestellt. Ein passives Trocknen an der Umgebungsluft erfordert eine Trocknungszeit von ca. 20 min.

Ein weiterer Aspekt der Erfindung betrifft die Verwendung eines Aktivators, insbesondere in einem System wie vorgängig erläutert für das Anbringen von Farbbeschichtungen, insbesondere von Ornamenten und/oder Beschriftungen, auf die Seitenfläche von Fahrzeugreifen. Der Aktivator weist Diethylenglykolmonoalkylether oder Polyethylenglykolmonoalkylether, wobei die Alkylgruppe 3 bis 8 Kohlenstoffatomen aufweist, ethoxilierten Fettalkohol mit 8 bis 24 Kohlenstoffatomen, und Diphosphat auf. Auf diese Weise können Fahrzeugreifen individuell verziert oder gekennzeichnet werden. Des Weiteren ist die Farbbeschichtung, insbesondere die Ornamente und/oder Beschriftungen, abriebfest und entfernbar.

Alternative Anwendungen des erfindungsgemässen Systems sind beispielsweise das Auftragen einer Farbbeschichtung auf Böden, Wandbeläge, Fassaden, Boote.

Die nachfolgende Tabelle 1 enthält zwei bevorzugte Ausführungsbeispiele des Aktivators des erfindungsgemässen Systems.

**Tabelle 1**

| Komponente | Ausführungsbeispiel 1 | Ausführungsbeispiel 2 |
|---|---|---|
| 2- (2-Butoxyethxy)ethanol | 1 Vol.-% | 2 Vol.-% |
| Isotridecanol ethoxyliert mit 5 bis 9 Mol Ethylenoxid | 2,5 Vol.-% | 7,6 Vol.-% |
| Tetrakaliumdiphosphat | 1 Vol.-% | 3 Vol.-% |

Die Komponenten der bevorzugten Ausführungsbeispiele 1 und 2 des Aktivators werden gemäss Tabelle 1 gemischt und mit H₂O auf 100 Vol.-% gebracht.

Werden die Aktivatoren in Sprühdosen bereitgestellt, so werden handelsübliche Lösungsmittel und/oder Treibmittel/-gase, welche im Sprühdosenbereich bekannt sind, zu den Komponenten hinzugemischt und mit H₂O auf 100 Vol.-% gebracht.

Die Ausführungsbeispiele 1 und 2 des Aktivators führen zu den vorgenannten vorteilhaften Eigenschaften des erfindungsgemässen Systems hinsichtlich verbesserter Haftung, einfachen Handhabung, Auftragung und Entfernbarkeit.

Die Erfindung wird anhand von Figuren exemplarischer Ausführungen näher erläutert. Es zeigen:
- Figur 1:: Schematische Darstellung einer bevorzugten Ausführung des erfindungsgemässen Verfahrens;
- Figur 2:: Seitenansicht eines Rads mit Applikationsbereich;
- Figur 3:: Ausschnitt einer Seitenansicht eines Rads mit einer Beschriftung;
- Figur 4:: Eine Schablone für eine Beschriftung eines Fahrzeugreifens.

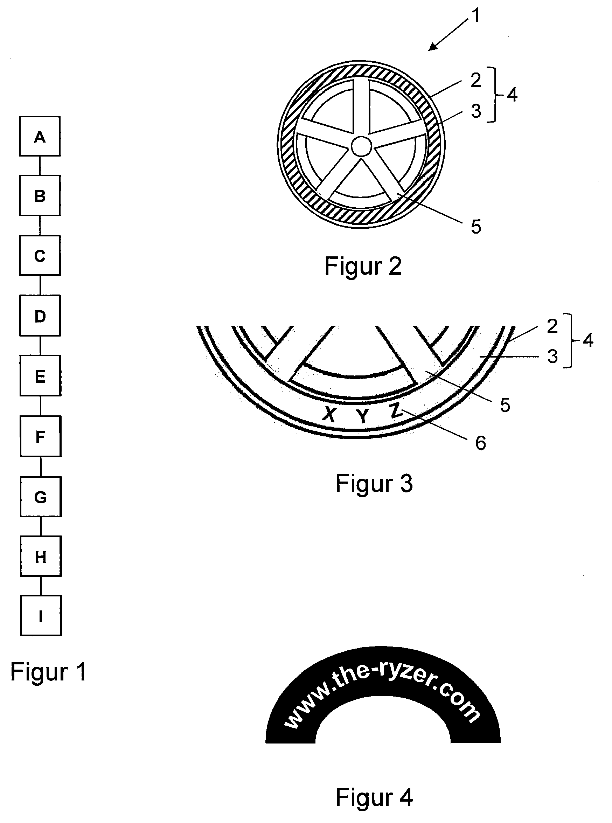

Figur 1 zeigt eine schematische Darstellung einer bevorzugten Ausführung des erfindungsgemässen Verfahrens. Der Aktivator und die Farbzusammensetzung sind in Sprühdosen bereitgestellt. Das Verfahren umfasst die Schritte Aufbringen des Aktivators (Schritt A), wobei der Aktivator auf die Seitenwand eines Fahrzeugreifens aufgesprüht wird, und Anrauen der Oberfläche der zu behandelnden Seitenwand des Fahrzeugreifens mit einem Mittel zum mechanischen Aufrauen (Schritt B). Der Aktivator wirkt ca. 5 min auf die Oberfläche ein (Schritt C). Der Aktivator sorgt für eine Vorbereitung und Reinigung der zu beschichtenden Oberfläche, indem die Oberfläche leicht angeätzt wird. Nach dem Einwirken des Aktivators wird die Oberfläche mit Wasser abgewaschen (Schritt D), um den Aktivator und Schmutz von der Oberfläche zu entfernen, und die Oberfläche an der Luft getrocknet oder aktiv trocken geblasen (Schritt E). Ein Klebeband aufweisend einen haftenden Bereich und einen nichthaftenden, gefalteten Bereich wird mittels des haftenden Bereichs auf die Felge des Fahrzeugreifens angebracht und mittels Auffalten des nichthaftenden Bereichs wird die Felge abgedeckt (Schritt F). Derart wird der Applikationsbereich für die Farbzusammensetzung definiert und ungewünschtes Auftragen der Farbzusammensetzung auf die Felge vermieden. Die Farbzusammensetzung wird auf die vorbehandelte Oberfläche aufgesprüht (Schritt G). Dabei werden mindestens zwei Farbschichten aufgesprüht. Die Farbschichten werden für ca. 20 min an der Luft getrocknet (Schritt H). Nach der Trocknung wird das Klebeband entfernt (Schritt I).

Figur 2 zeigt ein Rad 1 eines Fahrzeugs umfassend einen Reifen 4 und eine Felge 5. Der Reifen 4 weist eine Lauffläche 2 und eine Seitenwand 3 auf. Auf der Seitenwand 3 ist der Applikationsbereich für die Farbzusammensetzung des erfindungsgemässen Systems definiert (Schraffur). Durch die Verwendung des Klebebands (vgl. Beschreibung von Figur 1) wird der Applikationsbereich auf einfache Art und Weise definiert, die Farbzusammensetzung gezielt auf die Seitenwand 3 des Reifens 4 aufgebracht und ein Auftragen der Farbzusammensetzung auf die Felge 5 vermieden.

Figur 3 zeigt einen Ausschnitt Rads eines Fahrzeugs umfassend einen Reifen 4 und eine Felge 5. Der Reifen 4 weist eine Lauffläche 2 und eine Seitenwand 3 auf. Auf der Seitenwand 3 ist eine Beschriftung 6 aufgebracht. Die Beschriftung 6 entspricht einer mit dem erfindungsgemässen System aufgetragenen Farbschicht, wobei eine Schablone vor dem Aufbringen der Farbzusammensetzung auf den Applikationsbereich aufgebracht wurde. Derartige Schablonen können zusätzlich im erfindungsgemässen System, insbesondere massgefertigt, bereitgestellt werden. Derart wurde die individuelle Beschriftung 6 auf den Reifen 4 aufgebracht. Die Beschriftung 6 weist eine besonders gute Haftung auf und ist rückstandslos entfernbar.

Figur 4 zeigt eine Schablone 7, mit welcher eine Beschriftung mittels des erfindungsgemässen Systems auf ein Rad eines Fahrzeugs aufbringbar ist wie in der Beschreibung zu Figur 3 erläutert.

## Patentansprüche

1. System zum Auftragen einer Farbschicht auf ein Substrat umfassend natürlichen Kautschuk und/oder synthetischen Kautschuk, insbesondere auf Fahrzeugreifen, wobei das System
- mindestens einen Aktivator zum Aktivieren des Substrats,
- mindestens eine Farbzusammensetzung, und
- Gebrauchsinformationen für die Aufbringung der Farbzusammensetzung auf das Substrat, insbesondere auf Fahrzeugreifen,
umfasst, wobei der Aktivator
- Diethylenglykolmonoalkylether oder Polyethylenglykolmonoalkylether, wobei die Alkylgruppe 3 bis 8 Kohlenstoffatomen aufweist,
- ethoxilierten Fettalkohol mit 8 bis 24 Kohlenstoffatomen, und
- Diphosphat
aufweist.

2. System nach Anspruch 1, wobei der Aktivator
- 2-(2-Butoxyethoxy)ethanol, insbesondere im Bereich von 0,1-5 Vol.-%, bevorzugt 0,5 bis 4 Vol.-%, besonders bevorzugt 1 bis 3,0 Vol.-%,
- Isotridecanol ethoxyliert mit 5 bis 9 Mol Ethylenoxid, insbesondere im Bereich von 1 bis 20 Vol.-%, bevorzugt 2 bis 15 Vol.-%, besonders bevorzugt 2,5 bis 10 Vol.%, und
- Tetrakaliumdiphosphat im Bereich von 1 bis 15 Vol.-%, bevorzugt 1 bis 5 Vol.-%, besonders bevorzugt 1 bis 4 Vol.-%
aufweist.

3. System nach Anspruch 1 oder 2, wobei der Aktivator ein sprühbarer Aktivator ist.

4. System nach einem der Ansprüche 1 bis 3, wobei die Farbzusammensetzung eine sprühbare Farbzusammensetzung ist.

5. System nach einem der Ansprüche 1 bis 4 umfassend ein Mittel zum mechanischen Aufrauen des Substrats.

6. System nach einem der Ansprüche 1 bis 5 umfassend ein Klebeband als Schablone oder eine Schablone für das Aufbringen des Aktivators und/oder der Farbzusammensetzung und/oder als Schutz für Bereiche, welche nicht beschichtet werden sollen.

7. System nach Anspruch 6, wobei das Klebeband einen haftenden Bereich und einen nichthaftenden Bereich aufweist, wobei der nichthaftende Bereich gefaltet ist.

8. System nach einem der Ansprüche 1 bis 7, wobei das Substrat ein Reifen, insbesondere ein Autoreifen, ein Motorradreifen, ein Fahrradreifen, ein Traktorreifen, ein Lastkraftwagenreifen, ein Kleinmotoradreifen oder ein Kleinkraftradreifen ist.

9. Verfahren zum Auftragen einer Farbschicht auf ein Substrat umfassend natürlichen Kautschuk und/oder synthetischen Kautschuk, insbesondere auf Fahrzeugreifen, mit einem System nach einem der Ansprüche 1 bis 8, umfassend die Schritte
- Aufbringen des Aktivators auf das Substrat;
- Reinigen des Substrats;
- Aufbringen der Farbzusammensetzung auf das Substrat.

10. Verfahren nach Anspruch 9, wobei der Aktivator auf das Substrat aufgesprüht wird.

11. Verfahren nach Anspruch 9 oder 10, wobei die Farbzusammensetzung auf das Substrat aufgesprüht wird.

12. Verfahren nach einem der Ansprüche 9 bis 11, wobei das Substrat vor dem Aufbringen der Farbzusammensetzung, insbesondere mit einem Mittel zum Aufrauen, aufgeraut wird.

13. Verfahren nach einem der Ansprüche 9 bis 12, wobei ein Klebebands als Schablone oder eine Schablone für das Aufbringen des Aktivators und/oder der Farbezusammensetzung oder als Schutz für Bereiche, welche nicht beschichtet werden sollen, aufgebracht wird.

14. Verfahren nach einem der Ansprüche 9 bis 13, wobei die aufgebrachte Farbzusammensetzung aktiv getrocknet wird.

15. Verwendung eines Aktivators, insbesondere in einem System nach einem der Ansprüche 1 bis 8 für das Anbringen von Farbbeschichtungen, insbesondere von Ornamenten und/oder Beschriftungen, auf die Seitenfläche von Fahrzeugreifen, wobei der Aktivator
- Diethylenglykolmonoalkylether oder Polyethylenglykolmo-noalkylether, wobei die Alkylgruppe 3 bis 8 Kohlenstoffatomen aufweist,
- ethoxilierten Fettalkohol mit 8 bis 24 Kohlenstoffatomen, und
- Diphosphat
aufweist.
